# FASCICULE DE BREVET EUROPEEN

(11) **EP 1 400 376 B1**
(45) Date de publication et mention de la délivrance du brevet: **09.08.2006**
(21) Numéro de dépôt: 03025969.1
(22) Date de dépôt: 05.06.2000
(51) Int. Cl.: B60C 17/06

(54) **Appui de securité allégé pour pneumatique**
Erleichterter Notlaufring für Luftreifen
Lightened safety support for tyre

(30) Priorité: 10.06.1999 FR 9907469
(43) Date de publication de la demande: 24.03.2004
(62) Demande divisionnaire de: 00938743.2
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: Abinal, Richard, 63960 Veyre-Monton (FR); Drap, Sébastien, 63111 Dallet (FR); Drieux, Jean-Jacques, 63530 Volvic (FR); Hottebart, François, 63400 Chamalières (FR); Jara, Adam, 63100 Clermont-Ferrand (FR)
(74) Mandataire: Dequire, Philippe Jean-Marie Denis

(56) Documents cités:
- EP-A- 0 796 747
- EP-A- 0 836 957
- GB-A- 2 072 594
- US-A- 3 509 928
- PATENT ABSTRACTS OF JAPAN vol. 015, no. 253 (M-1129), 27 juin 1991 (1991-06-27) -& JP 03 082601 A (BRIDGESTONE CORP), 8 avril 1991 (1991-04-08)
- PATENT ABSTRACTS OF JAPAN vol. 1995, no. 05, 30 juin 1995 (1995-06-30) -& JP 07 032827 A (YOKOHAMA RUBBER CO LTD:THE), 3 février 1995 (1995-02-03)

## Description

La présente invention concerne les appuis de sécurité pour pneumatiques de véhicules que l'on monte à l'intérieur des pneumatiques, sur leurs jantes, pour supporter la charge en cas de défaillance du pneumatique, ou de pression anormalement basse.

La demande de brevet EP 0 796 747 A1 présente un appui de sécurité essentiellement réalisé en matériau élastomérique souple comportant une base sensiblement cylindrique, un sommet sensiblement cylindrique et un corps annulaire reliant la base et le sommet. Le corps présente, du côté destiné à être placé vers l'extérieur du véhicule, une pluralité d'évidements s'étendant sensiblement axialement jusqu'au moins la moitié du corps sans le traverser. Le corps annulaire est ainsi conçu pour supporter la charge en compression dans sa partie massive et en flambement dans sa partie évidée.

Cet appui présente de nombreux avantages, une excellente résistance aux chocs, une très bonne durée de vie sous charge et il procure un remarquable comportement à un véhicule roulant avec l'un au moins de ses pneumatiques en appui sur son appui de sécurité. Toutefois, son poids est élevé.

La demande de brevet JP 3-82601 présente notamment un appui de sécurité destiné à être monté sur une jante à l'intérieur d'un pneumatique équipant un véhicule, pour supporter la bande de roulement de ce pneumatique en cas de perte de pression de gonflage, comportant :
- une base sensiblement cylindrique destinée à s'adapter autour de la jante,
- un sommet sensiblement cylindrique destiné à entrer en contact avec la bande de roulement en cas de perte de pression, et laissant une garde par rapport à celle-ci à la pression nominale, et
- un corps annulaire reliant ladite base et ledit sommet, ledit corps comportant un élément de support continu circonférentiellement avec un plan médian circonférentiel, ledit élément de support comprenant :
   - une pluralité de cloisons s'étendant axialement de part et d'autre dudit plan médian circonférentiel et réparties sur la circonférence dudit appui, et
   - des éléments de jonction s'étendant sensiblement circonférentiellement et reliant chacun deux extrémités disposées du même côté de l'appui de deux cloisons adjacentes, lesdits éléments de jonction étant disposés successivement de façon alternée de part et d'autre desdites cloisons ;
dans lequel les cloisons et éléments de jonction sont sensiblement rectilignes et la différence entre les valeurs maximale et minimale de l'aire d'une section axiale de l'élément de support en fonction de l'azimut, rapportée à la somme de ces mêmes aires est de préférence inférieure à 0,3. En conséquence, en fonction de l'azimut, l'aire d'une section axiale de l'élément de support varie au maximum d'un facteur 2 pour procurer une bonne uniformité de capacité de charge et limiter les vibrations lors d'un roulage en appui.

On peut considérer que les cloisons de cet appui présentent, d'une extrémité latérale à l'autre, une inversion du sens de leur courbure.

Cet appui est réalisé essentiellement avec un matériau polymérique dur et l'ensemble de l'élément de support est conçu pour supporter la charge en compression.

L'invention a pour objet un appui de sécurité dans lequel, à durée de vie comparable, la performance d'allégement est encore améliorée.

L'appui de sécurité selon l'invention est caractérisé en ce que les cloisons présentent, d'une extrémité latérale à l'autre, au moins trois inversions du sens de leur courbure pour renforcer la résistance à un flambement sous un chargement radial du corps annulaire.

En effet, la partie centrale des cloisons de l'élément de support est éloignée des éléments de jonction et peut être détruite en cours de roulage en appui par apparition d'une déformation répétée de flambement. Dans le cas d'appuis réalisés essentiellement avec un matériau élastomérique, une telle déformation répétée de flambement entraîne en roulage une initiation et une propagation de fissures du côté des parois en extension. En revanche, dans le cas des appuis réalisés essentiellement avec des matériaux plastiques, une déformation de flambement entraîne l'apparition de déformations plastiques. Ces déformations irréversibles réduisent de façon importante la raideur de la structure, sa capacité de charge et la rende progressivement inapte à remplir sa fonction.

L'invention a aussi pour objet un appui caractérisé en ce que les cloisons présentent une partie centrale s'étendant sensiblement axialement entre deux parties latérales, ces parties latérales rejoignant les éléments de jonction en faisant avec la direction circonférentielle un angle γ compris entre 20 et 40 degrés pour renforcer la résistance à un flambement sous un chargement radial du corps annulaire.

Selon un exemple de réalisation, les cloisons présentent, dans leur zone centrale, deux parties s'étendant sensiblement axialement décalées circonférentiellement l'une par rapport à l'autre ainsi qu'une troisième partie de jonction. La variation α d'orientation moyenne entre cette troisième partie de jonction et les deux parties d'orientation sensiblement axiale est de préférence supérieure à 20 degrés.

Chaque élément de jonction peut être épaulé par au moins une paroi s'étendant sensiblement axialement vers l'extérieur du corps annulaire. Ces parois peuvent être disposées d'un seul côté ou des deux côtés de l'élément de support. Ces parois axiales sont peu sensibles au flambement car elles sont solidaires de l'élément de support et relativement courtes. Ces parois axiales permettent, à iso-largeur d'appui, de réduire la largeur de l'élément de support et donc d'augmenter sa résistance au flambement.

Dans un mode de réalisation préférentiel, chaque élément de jonction forme avec une paroi axiale qui l'épaule et les extrémités latérales des deux cloisons adjacentes un ensemble en forme d'étoile à trois branches et la largeur axiale d'une paroi axiale est inférieure ou égale à la moitié de la largeur axiale des deux cloisons adjacentes de l'élément de support.

Les éléments de support, selon l'invention, peuvent aussi comporter un voile sensiblement cylindrique coaxial avec l'appui et disposé radialement, par exemple, à mi-hauteur de l'élément de support. Ce voile est réalisé dans le même matériau que le reste du corps annulaire. Il permet, lorsqu'il est disposé à mi-hauteur, de diviser par deux la hauteur des cloisons et ainsi d'augmenter d'un facteur quatre, environ, la charge limite de flambement.

Pour faciliter la réalisation des appuis selon l'invention, les différentes géométries des éléments de support sont adaptées pour ne comprendre aucune partie en contre dépouille s'opposant à un démoulage axial de l'appui.

Les appuis selon l'invention peuvent être constitués essentiellement avec des matériaux très divers.

Selon un premier exemple, on peut utiliser un mélange à base de caoutchouc naturel ou synthétique. Dans ce cas, le module d'élasticité de ce mélange est de préférence compris entre 8 et 30 MPa. On entend par module d'élasticité un module d'extension sécant obtenu à une déformation de l'ordre de 10 %, à température ambiante au troisième cycle de sollicitation.

Un appui réalisé avec de tels matériaux et les géométries selon l'invention peut avoir un poids divisé par deux relativement à un appui tel que décrit dans la demande EP 0 796 747 A1 tout en conservant des performances de comportement et de durée de vie en roulage tout à fait acceptables.

Selon un second exemple, on peut utiliser un polyuréthanne élastomérique. L'avantage de ce matériau est d'offrir des modules d'élasticité notablement supérieurs, compris, par exemple, entre 20 et 150 MPa avec un auto échauffement en roulage limité. Par rapport à la demande EP 0 796 747 A1, cela permet d'obtenir des facteurs d'allégements supérieurs à 3 tout en conservant une excellente résistance aux chocs en raison d'allongements à la rupture élevés, supérieurs à 100 %.

On peut utiliser aussi des polymères thermoplastiques, de préférence sans charges de renfort rigides telles que des billes ou des fibres. En effet, de telles charges de renfort permettent d'augmenter sensiblement la rigidité de ces matériaux mais diminuent généralement leur résistance aux chocs de façon inacceptable pour un bon fonctionnement d'un appui de sécurité. De préférence, la résistance au choc Izod entaillé à - 30 °C de tels matériaux est supérieure à 10 kJ/m² et l'allongement rupture est supérieur à 50%. On peut choisir un polyamide dopé avec des particules élastomériques (tel le ZYTEL ST 801), un élastomère thermoplastique (TPE) ou un polyuréthanne thermoplastique (TPU).

Un dernier matériau avantageux pour les appuis selon l'invention est un polyuréthanne comportant des charges de renfort rigides telles que des billes ou des fibres. Il permet d'atteindre des modules d'élasticité supérieurs à ceux des polyuréthannes élastomériques tout en conservant des propriétés de choc acceptables.

Plusieurs modes de réalisation d'appuis selon l'invention sont maintenant décrits au moyen du dessin annexé dans lequel :
- la figure 1 est une vue de côté d'un appui de sécurité ;
- la figure 2 est une coupe axiale de l'appui de la figure 1 monté sur une jante de roue et en appui contre un pneumatique ;
- la figure 3 est une coupe AA tel qu'indiqué à la figure 1 d'un élément de support comportant des cloisons reliées par des éléments de jonction circonférentiels alternés ;
- la figure 4, similaire à la figure 3, présente une coupe d'un élément de support dont les cloisons comportent une partie centrale de liaison orientée circonférentiellement ;
- la figure 5, similaire à la figure 3, présente une coupe d'un élément de support dont les éléments de jonction circonférentiels ont une longueur variable ;
- la figure 6, similaire à la figure 3, présente une coupe d'un élément de support dont les cloisons présentent trois inversions de courbure dans leur largeur ;
- la figure 7, similaire à la figure 3, présente une coupe d'un corps annulaire avec un autre mode de réalisation d'un élément de support dont les cloisons présentent trois inversions de courbure dans leur largeur ;
- les figures 8 et 9, similaires à la figure 3, présentent deux coupes de corps annulaires avec des éléments de support dont les cloisons ont des épaisseurs variables et avec des parois axiales d'épaulement ; et
- la figure 10 présente en vue de côté un appui dont le corps annulaire comprend un voile central.

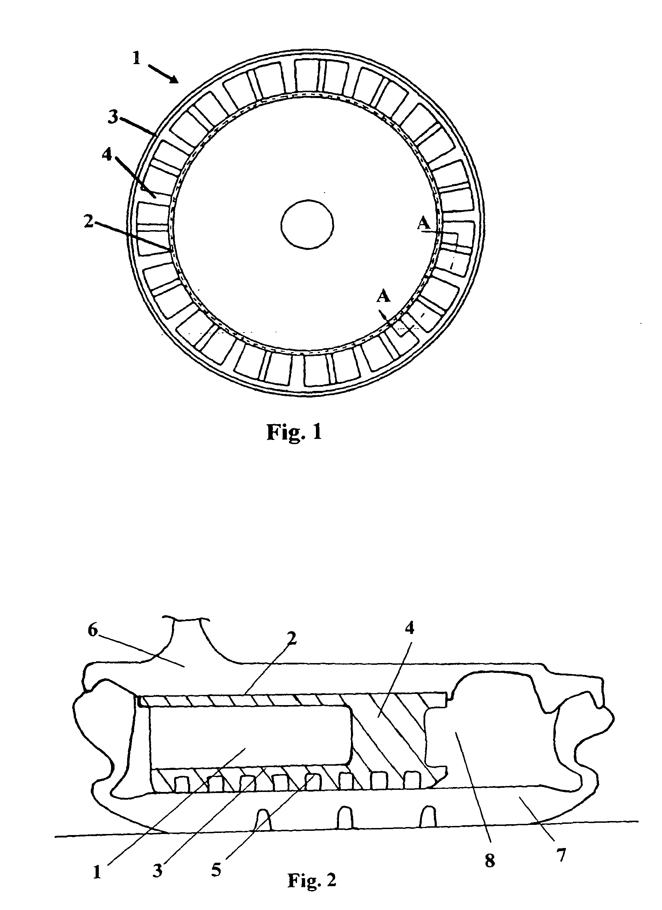

Les figures 1 et 2 présentent en vue de côté et en coupe axiale, un appui de sécurité 1 selon l'invention. Cet appui comprend essentiellement trois parties :
- une base 2, de forme généralement annulaire ;
- un sommet 3, sensiblement annulaire, avec sur sa paroi radialement extérieure (de façon optionnelle) des rainures longitudinales 5 ; et
- un corps annulaire 4 de liaison entre la base 2 et le sommet 3.

Cet appui 1 est destiné à être monté autour d'une jante préférentielle 6 telle que présentée à la figure 2 et à l'intérieur de la cavité 8 d'un pneumatique 7 correspondant. Une telle jante est décrite, notamment, dans la demande de brevet déjà citée EP 0 796 747 A1. La figure 2 illustre la fonction de l'appui 1 qui est de supporter la bande de roulement du pneumatique en cas de forte perte de pression de gonflage de ce pneumatique.

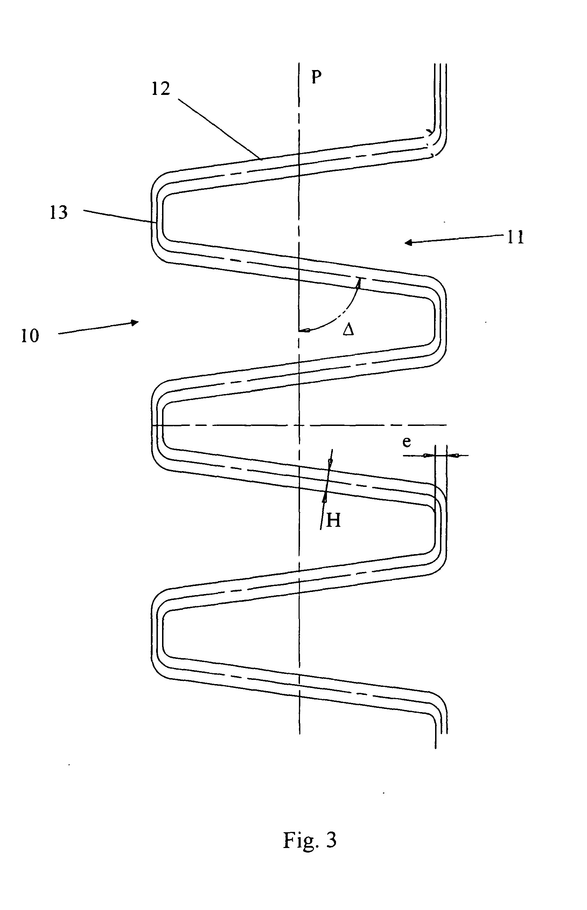

A la figure 3 est présenté un corps annulaire 10. Cette figure est une vue en coupe AA tel qu'indiqué à la figure 1. Le corps annulaire 10 est constitué d'un élément de support 11 continu circonférentiellement. L'élément de support comporte un ensemble de cloisons 12 reliées deux à deux par des éléments de jonction 13.

Les cloisons 12 s'étendent latéralement de part et d'autre du plan médian circonférentiel P et sont régulièrement réparties sur la circonférence de l'appui. Elles ont une inclinaison Δ relativement à la direction circonférentielle proche de 90 degrés. Leur épaisseur H est constante. Deux cloisons adjacentes ont une inclinaison opposée relativement à la direction axiale. Les éléments de jonction 13 ont une épaisseur e. Ils sont orientés circonférentiellement et relient chacun deux extrémités disposées du même côté de l'appui de deux cloisons adjacentes. Ces deux extrémités sont les plus proches l'une de l'autre. Les éléments de jonction sont ainsi disposés successivement de façon alternée de part et d'autre des cloisons. L'élément de support 11 ne comporte aucun élément en contre dépouille pour faciliter la fabrication de l'appui avec un démoulage axial.

Cet élément de support 11 a un comportement insuffisant lors d'un roulage en appui. On constate que la partie centrale des cloisons 12 est trop sensible au flambement. L'optimisation entre l'épaisseur des parois de l'élément de support et la masse en résultante n'est pas satisfaisante.

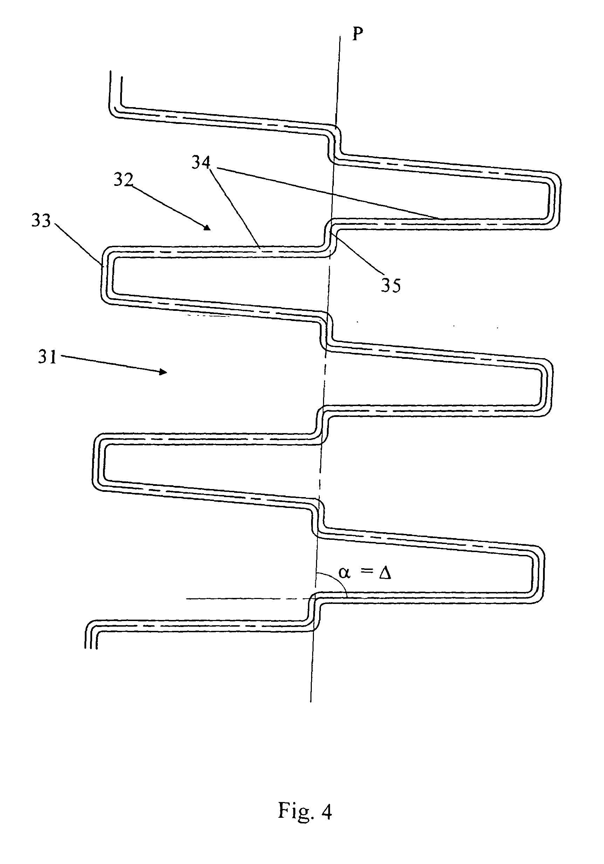

La figure 4 présente une coupe similaire à celle de la figure 3 d'un mode de réalisation des éléments de support. L'élément de support 31 présenté comporte comme précédemment un ensemble de cloisons 32 reliées par des éléments de jonction 33. Les cloisons 32 comportent deux parties latérales 34 de même inclinaison Δ relativement à la direction circonférentielle, décalées circonférentiellement et reliées dans la partie centrale de l'élément de support 31 par une troisième partie 35 d'orientation sensiblement circonférentielle. La variation α d'orientation moyenne entre les parties latérales 34 et la partie centrale 35 est ici de l'ordre de 80 degrés. Comme les parties 35 sont d'orientations circonférentielle, les angles α et Δ sont égaux. La présence de cette troisième partie centrale 35 d'orientation moyenne très différente de celle des deux parties latérales renforce la résistance au flambement de la partie centrale des cloisons 22. La variation α doit, pour être efficace, être supérieure à 20 degrés.

Dans cet exemple de réalisation, les cloisons 32 comportent, d'une extrémité latérale à l'autre, trois inversion du sens de leur courbure.

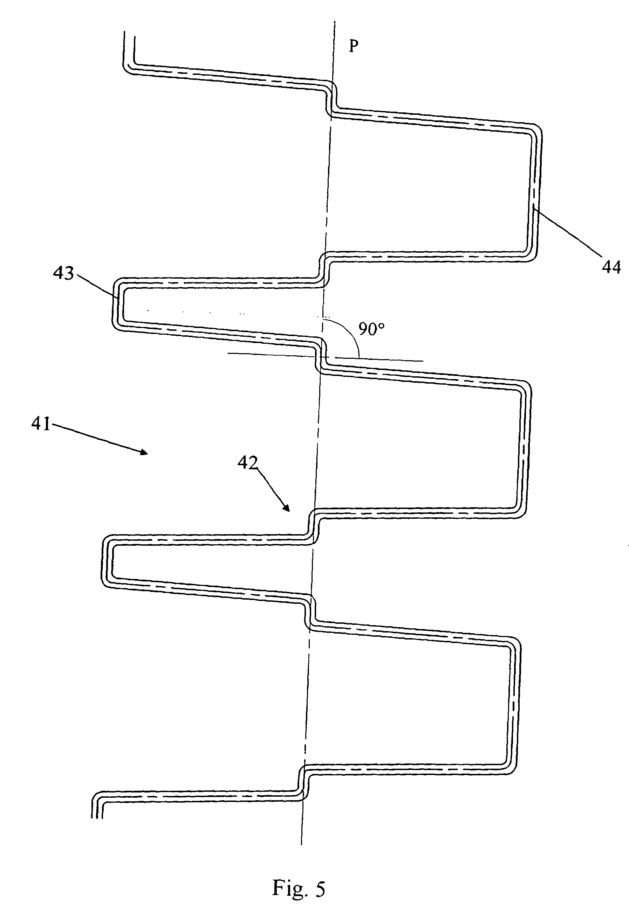

La figure 5 présente un second mode de réalisation d'un élément de support 41 selon l'invention. Dans ce mode de réalisation, les éléments de jonction 43 disposés d'un premier côté de l'élément de support ont une longueur circonférentielle inférieure à celle des éléments de jonction 44 disposés de l'autre côté de l'élément de support 41. La longueur sensiblement doublée des éléments de jonction 44 augmente la raideur en compression de l'élément de support 41 de ce côté de l'appui. Ce côté est à disposer du côté intérieur du véhicule, là où les efforts subis par l'appui en fonctionnement sont les plus importants.

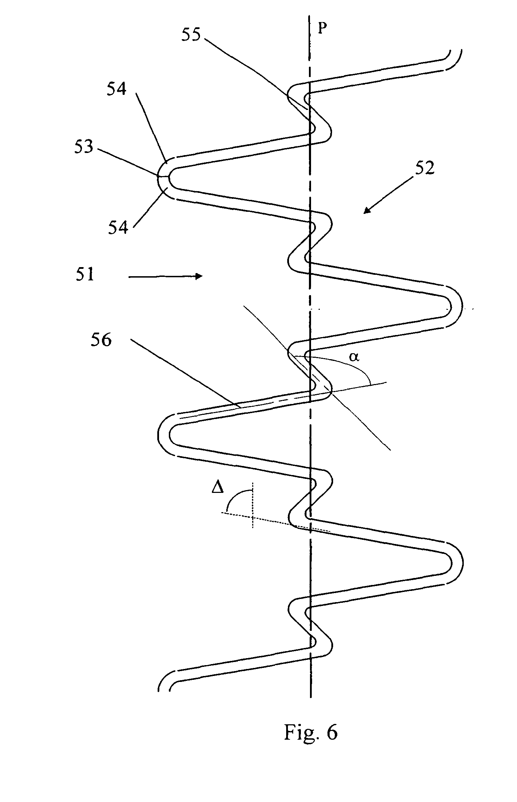

La figure 6 illustre un troisième mode de réalisation d'un élément de support 51. Dans ce mode de réalisation, les éléments de jonction 53 sont pratiquement réduits à la surface de contact entre les deux extrémités latérales 54 en forme d'arc de cercle des cloisons 52. Les cloisons 52 comportent aussi une partie centrale de liaison 55. La variation α d'orientation moyenne entre les deux parties latérales 56 et la partie centrale est supérieure à 90 degrés et de l'ordre de 110 degrés. Cela augmente la densité moyenne d'appui de l'élément de support 51 dans sa partie centrale. Les cloisons 52 comportent, d'une extrémité latérale à l'autre, trois inversions de leur sens de courbure.

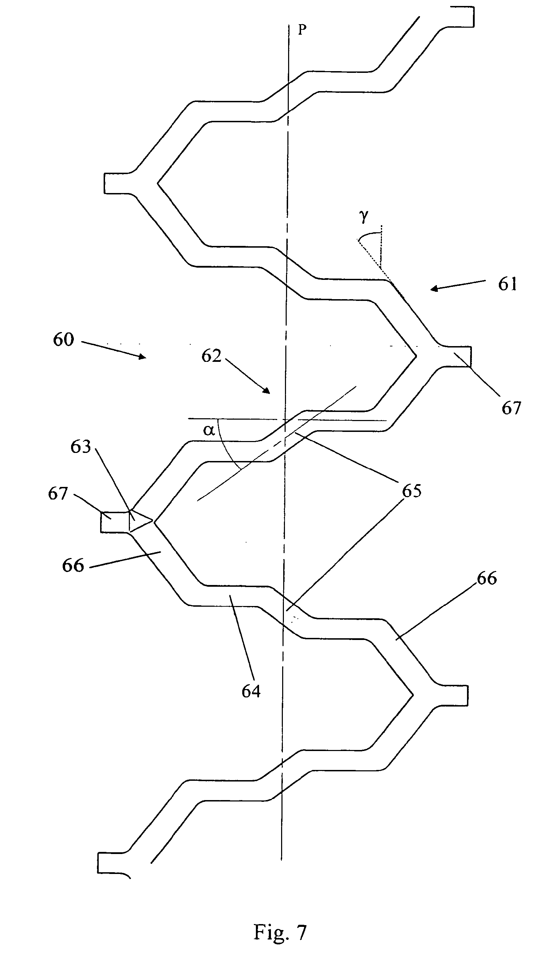

La figure 7 illustre un mode de réalisation proche de celui de la figure 6 avec les modifications suivantes. Les cloisons 62 comportent des segments rectilignes et présentent trois inversions de leur sens de courbure. Elles comprennent deux parties latérales d'orientation axiales 64 reliées d'une part par une partie centrale 65 et d'autre part aux éléments de jonction 63 par des extrémités latérales 66 d'orientation moyenne γ proche de 30 degrés relativement à la direction circonférentielle. La variation α d'orientation moyenne entre les deux parties d'orientation axiale 64 des cloisons 62 et la partie centrale de jonction 65 est de l'ordre de 40 degrés.

Les éléments de jonction 63 peuvent être ici définis comme des éléments de section sensiblement triangulaire disposés entre deux extrémités latérales 66 adjacentes. Des deux côtés de l'élément de support 61, le corps annulaire 60 comprend un ensemble de parois d'orientation sensiblement axiale 67 qui prolonge chaque élément de jonction 63 vers l'extérieur de l'appui. Chaque ensemble élément de jonction 63, extrémités latérales adjacentes 66 et paroi axiale 67 a ainsi une forme d'étoile à trois branches très résistante au flambement.

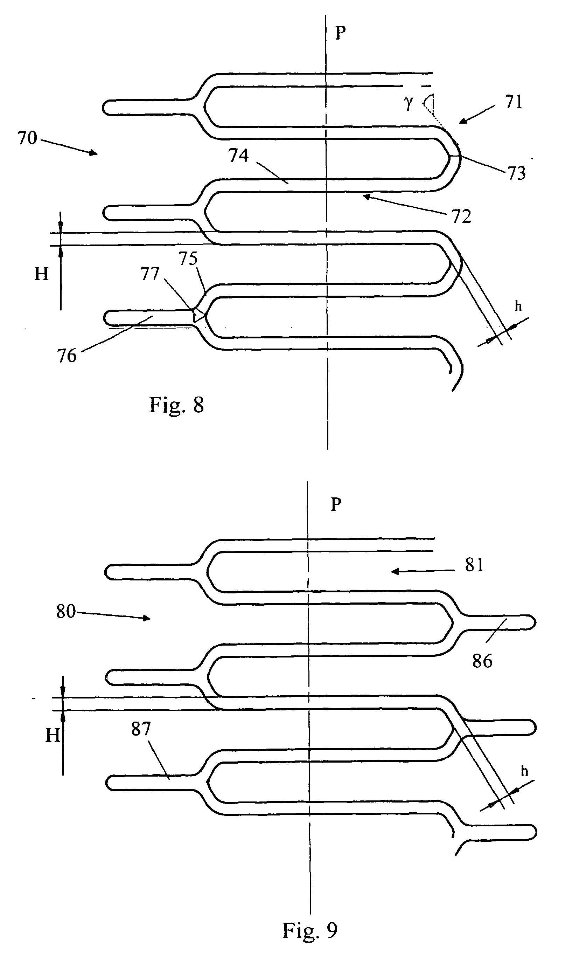

La figure 8 présente un autre mode de réalisation d'un corps annulaire 70. L'élément de support 71 comprend des cloisons 72 avec des parties centrales 74 d'orientation axiales prolongées de part et d'autre par une extrémité latérale 75 d'orientation γ proche de 30 degrés relativement à la direction circonférentielle. Les éléments de jonction 73 sont, d'un côté du corps annulaire 70, réduits à la surface de contact entre les deux extrémités latérales 75 adjacentes. De l'autre côté, le corps annulaire 70 comporte des parois latérales 76 qui épaulent de ce côté les éléments de jonction 77. Ces éléments de jonction 77 sont de forme sensiblement triangulaires. De ce côté, la raideur en compression de l'élément de support est supérieure. La longueur des parois latérales est notablement inférieure à la moitié de la longueur des parties centrales 74 des cloisons 72 pour qu'elles ne soient pas susceptibles de flamber. De préférence, le côté de l'élément de support dont la raideur en compression radiale est la plus élevée est à disposer du côté intérieur du véhicule parce qu'on a constaté que les efforts sont les plus élevés de ce côté intérieur du véhicule. Les cloisons 72 ont une épaisseur H dans leur partie centrale 74 supérieure à celle h de leurs parties latérales 75 pour renforcer la résistance au flambement de cette partie centrale 74.

La figure 9 présente un corps annulaire 80 très proche de 70. Ce corps annulaire comporte des parois axiales 86 et 87 qui épaulent des deux côtés l'élément de support 81, très proche de 71. Pour une largeur donnée de corps annulaire, ces parois latérales ont l'avantage de réduire la largeur axiale des cloisons de l'élément de support continu et ainsi d'améliorer la résistance au flambement de l'ensemble de la structure. Les longueurs axiales des parois 86 et 87 peuvent, comme illustré à la figure 9 être différentes.

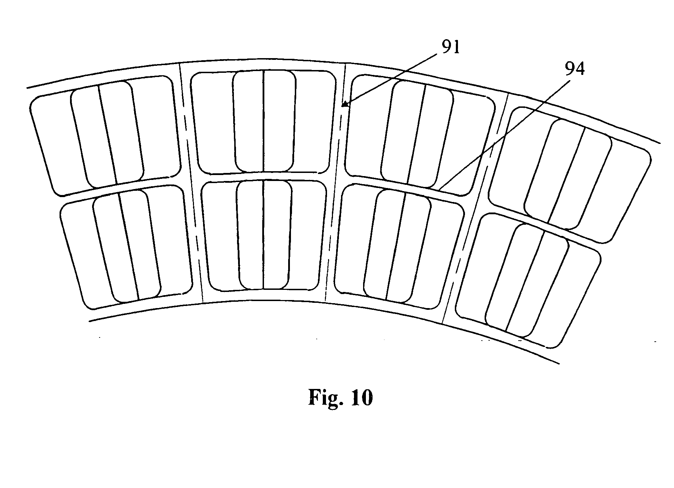

La figure 10 représente une vue axiale d'un appui avec un élément de support 91 tel que décrit à la figure 9 mais comportant en plus un voile circonférentiel 94 continu disposé à mi-hauteur du corps annulaire. Ce voile circonférentiel 94 de forme cylindrique a l'avantage d'apporter une augmentation très sensible, de l'ordre d'un facteur quatre, de la charge limite de flambement de la structure.

Comme il a déjà été expliqué, la demanderesse a constaté que la durée de vie des appuis en roulage est très liée aux conditions de leur sollicitation. Lorsque la charge qu'ils supportent entraîne l'apparition d'une déformation de flambement, cette déformation répétée est souvent l'origine de leur ruine. On peut définir la charge de flambement de la structure d'un appui comme la charge maximale que l'appui est capable de porter sous un chargement radial sans déformation d'extension de son corps annulaire.

On va maintenant comparer les deux formes de structure présentées aux figures 3 et 7. avec les données communes suivantes :

| | |
|---|---|
| Forme extérieure de l'appui | cylindrique |
| Largeur axiale appui | 80 mm |
| Diamètre intérieur appui | 486 mm |
| Diamètre extérieur appui | 586 mm |
| Epaisseur base | 3 mm |
| Epaisseur sommet | 2 mm |
| Hauteur structure | 45 mm |
| Nombre de motifs | 48 |
| Module matériau | 41 MPa |
| Masse volumique matériau | 1 100 kg/m³ |

Les résultats obtenus sont les suivants :

| **Forme** | **Masse appui** | **Charge de flambement** | **Ratio Charge / Masse** |
|---|---|---|---|
| Fig. 3 | 1,96 kg | 310 daN | 158 |
| Fig. 7 | 1,95 kg | 580 daN | 297 |

Ce tableau illustre bien l'augmentation de la charge de flambement induite par les moyens décrits dans le brevet.

Tous les éléments de support et les corps annulaires présentés sont réalisables par des techniques de moulage adaptées selon leurs matériaux constitutifs. De préférence, ils ne comportent aucune partie en contre dépouille pour faciliter un démoulage axial.

## Revendications

1. Appui de sécurité (1) destiné à être monté sur une jante (6) à l'intérieur d'un pneumatique (7) équipant un véhicule, pour supporter la bande de roulement de ce pneumatique en cas de perte de pression de gonflage, comportant :
- une base (2) sensiblement cylindrique destinée à s'adapter autour de la jante,
- un sommet (3) sensiblement cylindrique destiné à entrer en contact avec la bande de roulement en cas de perte de pression, et laissant une garde par rapport à celle-ci à la pression nominale, et
- un corps annulaire (60) reliant ladite base (2) et ledit sommet (3), ledit corps comportant un élément de support (31, 41, 51, 61) continu circonférentiellement avec un plan médian circonférentiel P, ledit élément de support comprenant :
• une pluralité de cloisons (32, 42, 52, 62) s'étendant axialement de part et d'autre dudit plan médian circonférentiel et réparties sur la circonférence dudit appui, et
• des éléments de jonction (33, 43, 44, 53, 63) s'étendant sensiblement circonférentiellement et reliant chacun deux extrémités disposées du même côté de l'appui de deux cloisons adjacentes, lesdits éléments de jonction étant disposés successivement de façon alternée de part et d'autre desdites cloisons,
**caractérisé en ce que** lesdites cloisons (32, 42, 52, 62) présentent, d'une extrémité latérale à l'autre, au moins trois inversions du sens de leur courbure pour renforcer la résistance à un flambement sous un chargement radial dudit corps annulaire.

2. Appui de sécurité (1) destiné à être monté sur une jante (6) à l'intérieur d'un pneumatique (7) équipant un véhicule, pour supporter la bande de roulement de ce pneumatique en cas de perte de pression de gonflage, comportant :
- une base (2) sensiblement cylindrique destinée à s'adapter autour de la jante,
- un sommet (3) sensiblement cylindrique destiné à entrer en contact avec la bande de roulement en cas de perte de pression, et laissant une garde par rapport à celle-ci à la pression nominale, et
- un corps annulaire (60, 70, 80) reliant ladite base (2) et ledit sommet (3), ledit corps comportant un élément de support (61, 71, 81) continu circonférentiellement avec un plan médian circonférentiel P, ledit élément de support comprenant :
• une pluralité de cloisons (62, 72) s'étendant axialement de part et d'autre dudit plan médian circonférentiel et réparties sur la circonférence dudit appui, et
• des éléments de jonction (63, 73, 77) s'étendant sensiblement circonférentiellement et reliant chacun deux extrémités disposées du même côté de l'appui de deux cloisons adjacentes, lesdits éléments de jonction étant disposés successivement de façon alternée de part et d'autre desdites cloisons,
**caractérisé en ce que** lesdites cloisons (62, 72) présentent une partie centrale (64, 65, 74) s'étendant sensiblement axialement entre deux parties latérales (66, 75), lesdites parties latérales (66, 75) rejoignant les éléments de jonction (63, 73, 77) en faisant avec la direction circonférentielle un angle γ compris entre 20 et 40 degrés.

3. Appui selon l'une des revendications 1 ou 2, dans lequel lesdites cloisons (32, 42, 52, 62) présentent, dans leur zone centrale, deux parties (34, 56, 64) s'étendant sensiblement axialement décalées circonférentiellement l'une par rapport à l'autre ainsi qu'une troisième partie (35, 55, 65) de jonction.

4. Appui selon la revendication 3, dans lequel la variation α d'orientation moyenne entre ladite troisième partie de jonction (35, 55, 65) et les deux parties d'orientation sensiblement axiale (34, 56, 64) est supérieure à 20 degrés.

5. Appui selon l'une des revendications 1 à 4, dans lequel, d'un côté dudit élément de support (71), chaque élément de jonction (77) est épaulé par au moins une paroi (76) s'étendant sensiblement axialement vers l'extérieur dudit corps annulaire (70).

6. Appui selon l'une des revendications 1 à 4, dans lequel, des deux côtés dudit élément de support (61, 81), chaque élément de jonction est épaulé par au moins une paroi (67, 86, 87) s'étendant sensiblement axialement vers l'extérieur dudit corps annulaire (60, 80).

7. Appui selon l'une des revendications 5 ou 6, dans lequel chaque élément de jonction (63, 77) forme avec une paroi axiale (67, 76, 86, 87) qui l'épaule et les extrémités latérales des deux cloisons adjacentes (66, 75) un ensemble en forme d'étoile à trois branches.

8. Appui selon l'une des revendications 5 à 7, dans lequel la largeur axiale d'une paroi axiale (67, 76, 86, 87) est inférieure ou égale à la moitié de la largeur axiale des deux cloisons adjacentes (62, 74) dudit élément de support (61, 71, 81).

9. Appui selon l'une des revendications 1 à 8, dans lequel l'élément de support (91) comporte en plus, un voilé (94) sensiblement cylindrique coaxial avec l'appui et dispose radialement de préférence à mi-hauteur dudit élément de support (91).

10. Appui selon l'une des revendications 1 à 9, dans lequel l'élément de support est adapté pour ne comprendre aucune partie en contre dépouille s'opposant à un démoulage axial de l'appui.

11. Appui selon l'une des revendications 1 à 10, dans lequel le matériau constitutif dudit appui est un mélange caoutchoutique de module d'élasticité compris entre 8 et 30 MPa.

12. Appui selon l'une des revendications 1 à 10, dans lequel le matériau constitutif dudit appui est un élastomère de polyuréthanne de module d'élasticité compris entre 20 et 150 MPa.

13. Appui selon l'une des revendications 1 à 10, dans lequel le matériau constitutif dudit appui est un polymère thermoplastique sans charges de renfort telles que des billes ou des fibres.

14. Appui selon la revendication 13, dans lequel le polymère thermoplastique possède une résistance au choc Izod entaillé à - 30°C supérieure à 10 kJ/m².

15. Appui selon la revendication 13, dans lequel le polymère thermoplastique est un polyamide dopé avec des particules élastomériques.

## Claims

1. Safety support (1) intended to be mounted on a rim (6) inside a tire (7) equipping a vehicle, in order to support the tread of that tire in case of loss of inflation pressure, containing:
- an appreciably cylindrical base (2) intended to fit around the rim,
- an appreciably cylindrical crown (3) intended to come in contact with the tread in case of pressure loss and leaving a clearance from the latter at nominal pressure, and
- an annular body (60) connecting said base (2) and said crown (2), said body containing a circumferentially continuous support member (31, 41, 51, 61) with a circumferential median plane P, the said support member comprising:
• a plurality of partitions (32, 42, 52, 62) extending axially on both sides of said circumferential median plane and distributed on the circumference of said support, and
• connecting members (33, 43, 44, 53, 63) appreciably extending circumferentially and joining each two ends placed on the same side of the support of two adjacent partitions, the said connecting members being successively arranged alternately on both sides of said partitions,
**characterized in that** said partitions (32, 42, 52, 62) present, from one lateral end to the other, at least three reversals of direction of their curvature in order to reinforce the buckling resistance under a radial load of said annular body.

2. Safety support (1) intended to be mounted on a rim (6) inside a tire (7) equipping a vehicle, in order to support the tread of that tire in case of loss of inflation pressure, containing:
- an appreciably cylindrical base (2) intended to fit around the rim,
- an appreciably cylindrical crown (3) intended to come in contact with the tread in case of pressure loss and leaving a clearance from the latter at nominal pressure, and
- an annular body (60, 70, 80) connecting said base (2) and said crown (2), said body containing a circumferentially continuous support member (61, 71, 81) with a circumferential median plane P, the said support member comprising:
• a plurality of partitions (62, 72) extending axially on both sides of said circumferential median plane and distributed on the circumference of said support, and
• connecting members (63, 73, 77) appreciably extending circumferentially and joining each two ends placed on the same side of the support of two adjacent partitions, the said connecting members being successively arranged alternately on both sides of said partitions,
**characterized in that** said partitions (62, 72) present a center part (64, 65, 74) appreciably extending axially between two lateral parts (66, 75), said lateral parts (66, 75) joining the connecting members (63, 73, 77) by forming an angle γ with the circumferential direction ranging between 20 and 40 degrees.

3. Support according to one of Claims 1 or 2, in which said partitions (32, 42, 62) present, in their center zone, two parts (34, 56, 64) appreciably extended axially offset circumferentially from each other as well as a third (35, 55, 65) connecting part.

4. Support according to Claim 3, in which the mean orientation variation a between said third (35, 55, 65) connecting part and the two parts (34, 56, 64) of appreciably axial orientation is greater than 20 degrees.

5. Support according to one of Claims 1 to 4, in which, on one side of said support member (71), each connecting member (77) is backed by at least one wall (76) appreciably extending axially toward the outside of said annular body (70).

6. Support according to one of Claims 1 to 4, in which, on both sides of said support member (61, 81), each connecting member is backed by at least one wall (67, 86, 87) appreciably extending axially toward the outside of said annular body (60, 80).

7. Support according to one of Claims 5 or 6, in which each connecting member(63, 77) forms, with an axial wall (67, 76, 86, 87) backing it and the lateral ends of the two adjacent partitions (66, 75), a star-shaped assembly with three branches.

8. Support according to one of Claims 5 to 7, in which the axial width of an axial wall (67, 76, 86, 87) is less than or equal to half the axial width of the two adjacent partitions (62, 74) of said support member (61,71,81).

9. Support according to one of Claims 1 to 8, in which the support member (91) contains, in addition, an appreciably cylindrical web (94) coaxial with the support and placed radially preferably at mid-height of said support member (91).

10. Support according to one of Claims 1 to 9, in which the support member is adapted not to include any undercut part standing in the way of axial stripping of the support.

11. Support according to one of Claims 1 to 10, in which the constituent material of said support is a rubber compound with modulus of elasticity ranging between 8 and 30 MPa.

12. Support according to one of Claims 1 to 10, in which the constituent material of said support is a polyurethane elastomer with modulus of elasticity ranging between 20 and 150 MPa.

13. Support according to one of Claims 1 to 10, in which the constituent material of said support is a thermoplastic polymer without rigid reinforcing fillers such as balls or fibers.

14. Support according to Claim 13, in which the thermoplastic polymer possesses an Izod test toughness at -30°C greater than 10 kJ/m².

15. Support according to Claim 13, in which the thermoplastic polymer is a polyamide doped with elastomeric particles.

## Patentansprüche

1. Sicherheitsauflage (1), die dazu bestimmt ist, auf einer Felge (6) im Inneren eines Reifens (7) montiert zu werden, mit dem ein Fahrzeug ausgestattet ist, um die Lauffläche dieses Reifens im Fall eines Aufpumpdruck-Verlustes zu tragen, mit
- einer im Wesentlichen zylindrischen Basis (2), die dazu bestimmt ist, sich rund um die Felge (6) anzupassen,
- einem im Wesentlichen zylindrischen Scheitel (3), der dazu bestimmt ist, im Fall eines Druckverlustes in Berührung mit der Lauffläche zu treten, und bei Nenndruck einen Schutzabstand zu ihr lässt, und
- einem ringförmigen Körper (60), der die genannte Basis (2) und den genannten Scheitel (3) verbindet, wobei der genannte Körper ein in Umfangsrichtung durchgehendes Trageelement (31, 41, 51, 61) mit einer Umfangs-Mittelebene P aufweist, wobei das Trageelement Folgendes aufweist:
• eine Vielzahl von Trennwänden (32, 42, 52, 62), die sich axial beiderseits der genannten Umfangs-Mittelebene P erstrecken und über den Umfang der genannten Auflage verteilt sind, und
• Verbindungselemente (33, 43, 44, 53, 63), die sich im Wesentlichen in Umfangsrichtung erstrecken und jeweils zwei Enden zweier benachbarter Trennwände verbinden, die auf der gleichen Seite der Auflage angeordnet sind, wobei die genannten Verbindungselemente aufeinanderfolgend und alternierend beiderseits der genannten Trennwände angeordnet sind,
**dadurch gekennzeichnet, das** die genannten Trennwände (32, 42, 52, 62) von einem seitlichen Ende zum anderen mindestens drei Umkehrungen ihrer Krümmungsrichtung aufweisen, um die Knickbeständigkeit des genanten ringförmigen Körpers unter radialer Last zu verstärken.

2. Sicherheitsauflage (1), die dazu bestimmt ist, auf einer Felge (6) im Inneren eines Reifens (7) montiert zu werden, mit dem ein Fahrzeug ausgestattet ist, um die Lauffläche dieses Reifens im Fall eines Aufpumpdruck-Verlustes zu tragen, mit
- einer im Wesentlichen zylindrischen Basis (2), die dazu bestimmt ist, sich rund um die Felge (6) anzupassen,
- einem im Wesentlichen zylindrischen Scheitel (3), der dazu bestimmt ist, im Fall eines Druckverlustes in Berührung mit der Lauffläche zu treten, und bei Nenndruck einen Schutzabstand zu ihr lässt, und
- einem ringförmigen Körper (60, 70, 80), der die genannte Basis (2) und den genannten Scheitel (3) verbindet, wobei der genannte Körper ein in Umfangsrichtung durchgehendes Trageelement (61, 71, 81) mit einer Umfangs-Mittelebene P aufweist, wobei das Trageelement Folgendes aufweist:
• eine Vielzahl von Trennwänden (62, 72), die sich axial beiderseits der genannten Umfangs-Mittelebene P erstrecken und über den Umfang der genannten Auflage verteilt sind, und
• Verbindungselemente (63, 73, 77), die sich im Wesentlichen in Umfangsrichtung erstrecken und jeweils zwei Enden zweier benachbarter Trennwände verbinden, die auf der gleichen Seite der Auflage angeordnet sind, wobei die genannten Verbindungselemente aufeinanderfolgend und alternierend beiderseits der genannten Trennwände angeordnet sind,
**dadurch gekennzeichnet, dass** die genannten Trennwände (62, 72) einen mittleren Teil (64, 65, 74) aufweisen, der sich im Wesentlichen axial zwischen zwei seitlichen Teilen (66, 75) erstreckt, wobei die genannten seitlichen Teile (66, 75) die Verbindungselemente (63, 73, 77) miteinander verbinden, wobei sie zur Umfangsrichtung einen Winkel γ bilden, der zwischen 20 und 40 Grad liegt.

3. Auflage nach Anspruch 1 oder 2, bei der die genannten Trennwände (32, 42, 52, 62) in ihrer mittleren Zone zwei Teile (34, 56, 64), die sich im Wesentlichen axial erstrecken und in Umfangsrichtung zueinander versetzt sind, sowie einen dritten Verbindungsteil (35, 55, 65) aufweisen.

4. Auflage nach Anspruch 3, bei der die mittlere Ausrichtungsänderung α zwischen dem genannten dritten Verbindungsteil (35, 55, 65) und den beiden Teilen (34, 56, 64) mit im Wesentlichen axialer Ausrichtung größer als 20 Grad ist.

5. Auflage nach einem der Ansprüche 1 bis 4, bei der auf einer Seite des genannten Trageelements (71) jedes Verbindungselement (77) durch mindestens eine Wand (76) verlängert ist, die sich im Wesentlichen axial zur Außenseite des genannten ringförmigen Körpers (70) erstreckt.

6. Auflage nach einem der Ansprüche 1 bis 4, bei der beiderseits des genannten Trageelements (61, 81) jedes Verbindungselement durch mindestens eine Wand (67, 86, 87) verlängert ist, die sich im Wesentlichen axial zur Außenseite des genannten ringförmigen Körpers (60, 80) erstreckt.

7. Auflage nach Anspruch 5 oder 6, bei der jedes Verbindungselement (63, 77) mit einer axialen Wand (67, 76, 86, 87), durch die es verlängert ist, und den seitlichen Enden zweier benachbarter Trennwände (66,75) eine Anordnung in Form eines dreizackigen Sterns bildet.

8. Auflage nach einem der Ansprüche 5 bis 7, bei der die axiale Breite einer axialen Wand (67, 76, 86, 87) kleiner oder gleich der Hälfte der axialen Breite zweier benachbarter Trennwände (62, 74) des genannten Trageelements (61, 71, 81) ist.

9. Auflage nach einem der Ansprüche 1 bis 8, bei der das Trageelement (91) außerdem eine im Wesentlichen zylindrische Abdeckung (94) aufweist, die koaxial zur Auflage und radial bevorzugt auf halber Höhe des genannten Trageelements (91) angeordnet ist.

10. Auflage nach einem der Ansprüche 1 bis 9, bei der das Trageelement so ausgebildet ist, dass es keinen hinterschnittenen Teil aufweist, der sich einer axialen Entformung der Auflage widersetzen könnte.

11. Auflage nach einem der Ansprüche 1 bis 10, bei der das Material, das die genannte Auflage bildet, eine Kautschukmischung mit einem Elastizitätsmodul zwischen 8 und 30 MPa ist.

12. Auflage nach einem der Ansprüche 1 bis 10, bei der das Material, das die genannte Auflage bildet, ein Polyurethan-Elastomer mit einem Elastizitätsmodul zwischen 20 und 150 MPa ist.

13. Auflage nach einem der Ansprüche 1 bis 10, bei der das Material, das die genannte Auflage bildet, ein thermoplastisches Polymer ohne Verstärkungsfüllstoffe wie Kugeln oder Fasern ist.

14. Auflage nach Anspruch 13, bei der das thermoplastische Material eine Izod-Kerbschlagzähigkeit bei -30 °C von mehr als 10 kJ/m² aufweist.

15. Auflage nach Anspruch 13, bei der das thermoplastische Polymer ein mit Elastomerpartikeln dotiertes Polyamid ist.
